Europäisches Patentamt

European Patent Office

Office européen des brevets

(19)

(11) Publication number : **0 680 073 A2**

(12) **EUROPEAN PATENT APPLICATION**

(21) Application number : 95302904.8

(22) Date of filing : 28.04.95

(51) Int. Cl.$^6$ : **H01J 61/22, A01G 9/20, H01J 61/82, H01J 61/28**

(30) Priority : 28.04.94 GB 9408386

(43) Date of publication of application :
02.11.95 Bulletin 95/44

(84) Designated Contracting States :
BE DE FR GB NL

(71) Applicant : **FLOWIL INTERNATIONAL
LIGHTING (HOLDING) B.V.**
**Oudeweg 155**
**NL-2031 CC Haarlem (NL)**

(72) Inventor : **Geens, Rudy Emiel Amelia, Dr.,**
**50/13 Leeuwerikenstraat**
**B-3001 Leuven (BE)**

(74) Representative : **Butler, Michael John**
**FRANK B. DEHN & CO.**
**Imperial House**
**15-19 Kingsway**
**London, WC2B 6UZ (GB)**

(54) **Discharge lamp for enhancing photosynthesis.**

(57)   A high pressure sodium lamp has reduced sodium content in the amalgam and significantly higher mercury to sodium vapour pressure ratio than in a standard lamp. This increases the red light output, thus matching the spectral sensitivity for photosynthesis. The lamp is intended for use in greenhouses and the like.

Photosynthesis Spectral Sensitivity and Photosynyhesis lamp Spectrum

SYLVANIA

Figure 3

EP 0 680 073 A2

This invention relates to a discharge lamp for enhancing photosynthesis in plants, and in particular to a novel high pressure sodium lamp.

Plant growth is based on the formation of organic compounds and oxygen from carbon dioxide and water, by the process known as photosynthesis. Light is the source of energy required for photosynthesis, and where natural light is scarce as in the winter months or when plants are grown indoors, artificial light is necessary. Because of its high efficacy in terms of lumens per watt, the High Pressure Sodium (HPS) lamp is often used in greenhouses and other situations where plants are provided with artificial light.

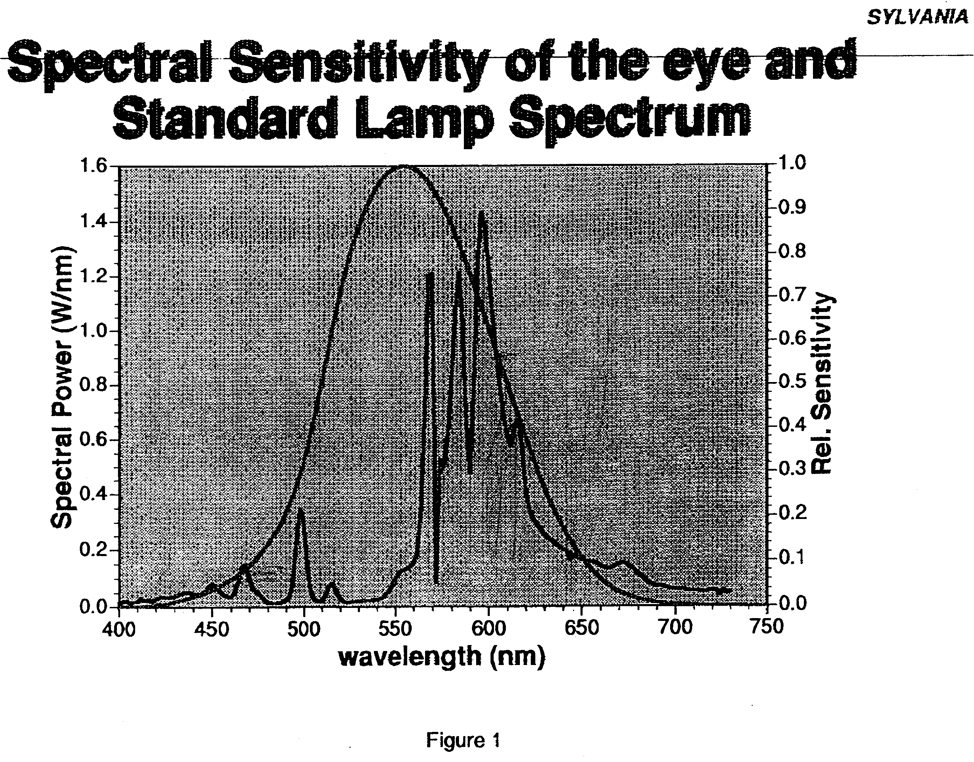

The HPS lamp generally consists of a ceramic arc tube containing metallic sodium doped with mercury, and argon or xenon. Standard HPS lamps are designed for maximum efficacy for the human eye, which has its maximum sensitivity at 555 nm. Figure 1 shows the spectral power profile for a standard HPS lamp, with three peaks between 550 and 600 nm. The figure also shows the relative sensitivity curve for the human eye. As can be seen, most of the light output is reasonably close to the 555 nm maximum sensitivity for the human eye. The three main peaks are all in a region where the relative sensitivity is greater than 0.5, and indeed is about 0.7 or more.

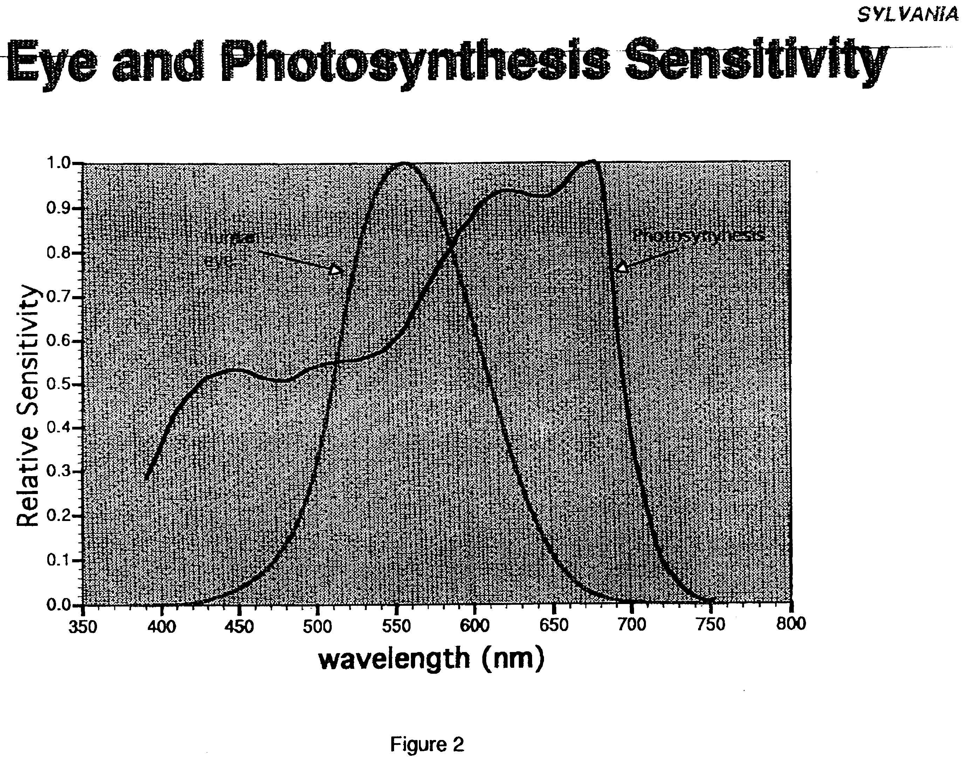

However, plant growth has a very different spectral sensitivity. Figure 2 shows the relative sensitivity for the human eye and the relative sensitivity for photosynthesis. As can be seen, for photosynthesis there is a peak at 675 nm, and from about 610 nm to 675 nm the relative sensitivity is above 0.9. From 680 nm upwards there is the characteristic "Red drop".

The quantum efficiency of photosynthesis drops sharply at wavelengths above 680 nm, even though chlorophyll still absorbs light in the range from 680 to 700 nm. However, it is known that the rate of photosynthesis using long wavelength light can be enhanced by adding light of a shorter wavelength such as 600 nm. The photosynthetic rate in the presence of both 600 nm and 700 nm light is greater than the sum of the rates when the two wavelengths are given separately. These factors, i.e. the enhancement phenomenon and the red drop have been said to establish that photosynthesis requires the interaction of two light reactions; both of them can be driven by light of a wavelength less than 680 nm, but only one of them by light of longer wavelength.

Standard HPS lamps have their spectral power concentrated at wavelengths where the relative sensitivity for photosynthesis is about 0.7 to 0.8. Such lamps will therefore be usable in the context of plant growth, and as noted above they are commonly used in greenhouses. However, they do not enable advantage to be taken of the higher spectral sensitivity at wavelengths above about 610 Nm.

It is known that blue light, i.e. light at shorter wavelengths, is necessary for effective plant growth and in particular to prevent plants being spindly with small leaves. In practice, the amount of blue light required is only small and can be supplied even by weak sunlight through the glass of a greenhouse. It has been proposed to increase slightly the blue light content of an HPS lamp, with the claimed intention of improving plant growth due to enhancement of the photomorphogenesis process. However, such a lamp cannot improve photosynthesis substantially, although in some cases there is a slight photosynthetic yield increase for wavelengths below about 450 nm.

It is therefore an object of the present invention to provide a high pressure sodium lamp with a spectrum which will enhance photosynthesis.

Viewed from one aspect the present invention provides a high pressure sodium lamp having substantial spectral power at wavelengths in the region of 650 nm to 680 nm.

Preferably, the lamp has substantial spectral power across wavelengths ranging from about 600 nm to 680 nm, and preferably 610 nm to 675 nm.

It will be apparent that by providing substantial power at these longer wavelengths, there can be optimisation of the spectrum so as to correspond to the photosynthesis sensitivity profile. Thus, the rate of photosynthesis will be increased and advantage is taken of the higher spectral sensitivity at these longer wavelengths. This will improve plant growth.

In practice, the desired spectral power distribution is provided by a spectrum in which there is reversal of the normal D line at 589 nm, exhibited by standard HPS lamps. Accordingly, viewed from another aspect the present invention provides a high pressure sodium lamp whose spectrum exhibits reversal of the D line and substantial output of wavelengths above that at the reversed D line.

In practice, the desired effect is achieved by using smaller fractions of sodium and thus larger mercury to sodium pressure ratios.

Thus, viewed from another aspect there is provided a high pressure sodium lamp in which the mercury-sodium amalgam contains no more than 15% by weight of sodium. Preferably the sodium content is no more than 12% and optionally no more than 10%. Preferably the sodium content of the amalgam is at least 3%. Thus a preferred range for the sodium content is 3 to 12% by weight, or 0.21 to 0.54 mole fractions. In a preferred embodiment the content is in the range of 3% of 5%.

In practice, the lower limit is that at which the amalgam still remains solid, in order to avoid handling dif-

2

ficulties.

The amalgam mass is preferably high enough such that under normal operating conditions of the lamp no more than 10% of the total amalgam is evaporated.

Under the above dosing conditions, in operation the mercury to sodium pressure ratio can be at least 50.

Thus viewed from another aspect there is provided a high pressure sodium lamp in which, in normal operation, the ratio of mercury vapour pressure to sodium vapour pressure is at least 50.

By contrast a standard HPS lamp has a sodium content of between 18% and 25%, or 0.66 to 0.70 mole fractions, and mercury to sodium pressure ratios which do not exceed 15. About 1% of the sodium and 10% of the mercury content are in the vapour state.

Viewed from another aspect the present invention provides a method of enhancing photosynthesis in a plant by illuminating the plant with a high pressure sodium lamp whose spectrum exhibits a relatively high proportion of red light.

The present invention also extends to an arc tube light source for use in the lamps described above.

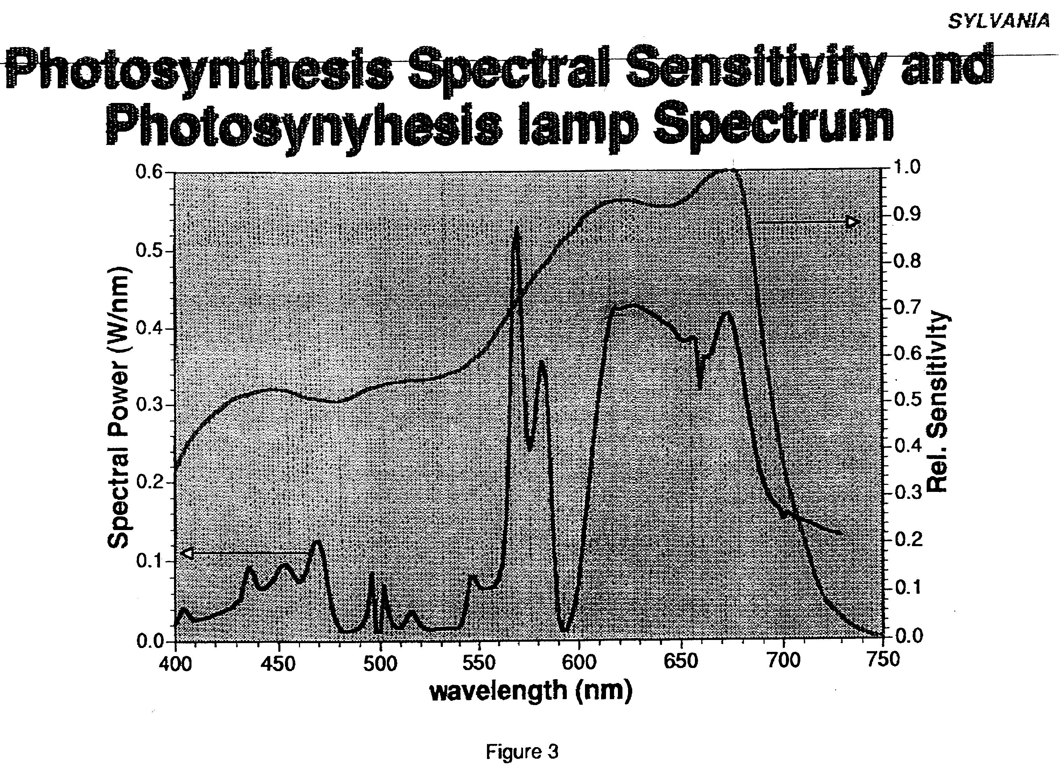

An example of a high pressure sodium lamp will now be described by reference to Figure 3 which shows the lamp spectrum and the photosynthesis spectral sensitivity curve.

EXAMPLE

| | |
|---|---|
| Lamp Physical Details | :- Cylindrical PCA arc tube with an inner diameter of 10.5 mm and an inner cavity length of 57mm. |
| Gas fill | :- 33 mbar of xenon at room temperature. |
| Amalgam details | :- 150 mg of sodium/mercury amalgam, containing 3.4% by weight of sodium. |
| Mercury to Sodium vapour pressure ratio in operation | :- 69.5 |

In operation the lamp exhibits the spectrum shown in Figure 3. In view of the very high red content in the spectrum, the colour temperature drops to 1800°K and at the low colour temperature the colour rendering index approaches 80.

As can be seen from Figure 3, there is significantly reduced output in the region representing maximum sensitivity for the human eye. Indeed, the lumens per watt (efficiently for the human eye) drops to about 50% of that of a standard lamp at the same wattage and wall loading. The lamp is therefore specifically optimised for enhancing photosynthesis even though there is a substantial deterioration of performance as regards the human eye.

As can be seen, the spectrum exhibits relatively narrow peaks at about 565 nm and 580 nm, but then a very broad peak ranging from about 610 nm to 680 nm with a maximum at about 675 nm. There is substantial output over all of this range, and the output between 650 nm and 680 nm corresponds to the maximum on the photosynthesis sensitivity curve. The radiation from the self reversed resonance D line at 589 nm has been shifted towards the red part of the spectrum, there being a large enhancement of the red wing. The radiation in this wing is generated by molecular bands of the sodium-mercury molecular system.

It will be noted from Figure 3 that there is significant light output both at the upper end, i.e. up to 680 nm, and at just above 600 nm. Thus there is significant light output at both of the wavelengths which, together, result in improved photosynthetic rates.

In terms of its physical construction a lamp in accordance with the invention will be generally the same as a standard HPS lamp. However, due to the high mercury pressure the lamp voltage will be very high if standard PCA tubes are used. This problem can be overcome by using a shorter tube with a larger diameter so that the wall loading remains constant.

The wall loading is defined by:-

$$Pw = \frac{PLA}{\pi r^2 l}$$

where :

Pw   is the wall body

PLA   is the lamp power

r   is the arc tube radius

l   is the arc length (distance between electrode tips)

The following Table shows a comparative analysis of the radiated power for a lamp in accordance with the invention and a standard HPS lamp.

TABLE

| | Range | Standard | Invention | Ratio |
|---|---|---|---|---|
| | (nm) | (W) | (W) | |
| Far-Red | 700-800 | 4.40 | 23.9 | 2.93 |
| Red | 600-700 | 27.80 | 40.4 | 1.45 |
| Yellow-Green | 500-600 | 35.85 | 12.75 | 0.36 |
| Blue | 400-500 | 5.76 | 6.57 | 1.14 |

It can be seen that in accordance with the invention there is a significant increase in the red, and particularly far red, output. The yellow-green output is very much reduced whilst the blue output shows a slight increase.

The high pressure sodium lamp in accordance with the invention may be used in any location where enhanced photosynthesis in plants is required.

It is envisaged that the high pressure sodium lamp in accordance with the present invention will be of significant benefit for use as artificial light sources in greenhouses and the like.

## Claims

1. A high pressure sodium lamp having substantial spectral power at wavelengths in the region of about 650 nm to 680 nm.

2. A lamp as claimed in claim 1 wherein there is substantial spectral power at wavelengths in the region of 600 nm.

3. A lamp as claimed in claim 2, having substantial spectral power across wavelengths from about 600 nm to 680 nm.

4. A lamp as claimed in claim 3 wherein there is substantial spectral power across wavelengths in the range of from 610 nm to 675 nm.

5. A high pressure sodium lamp whose spectrum exhibits reversal of the D line and substantial output at wavelengths above that of the reversed D line.

6. A high pressure sodium lamp in which the mercury-sodium amalgam contains no more than 15% by weight of sodium.

7. A lamp as claimed in claim 6 wherein the sodium content is no more than 12% by weight of the amalgam.

8. A lamp as claimed in claim 6 or 7 wherein the sodium content is no less than 3% by weight of the amalgam.

9. A high pressure sodium lamp in which, in normal operation, the ratio of mercury vapour pressure to sodium vapour pressure is at least 50.

10. A lamp as claimed in any preceding claim wherein, in normal operation, no more than 10% by weight of the total mercury-sodium amalgam is evaporated.

11. An arc tube for use in a lamp as claimed in claim 7, 8 or 9, containing a mercury-sodium amalgam in which the sodium content is in the range of 3% to 12% by weight.

12. A method of enhancing photosynthesis in a plant by illuminating the plant by means of a lamp as claimed in any of claims 1 to 10.

13. A method of enhancing photosynthesis in a plant by illuminating the plant with a high pressure sodium lamp whose spectrum exhibits a relatively high proportion of red light.

Figure 1

# Eye and Photosynthesis Sensitivity

Figure 2

EP 0 680 073 A2

Figure 3